Europäisches Patentamt

European Patent Office

Office européen des brevets

(19)

(11) Veröffentlichungsnummer: **0 401 593**
**A1**

(12) # EUROPÄISCHE PATENTANMELDUNG

(21) Anmeldenummer: **90109748.5**

(22) Anmeldetag: **22.05.90**

(51) Int. Cl.⁵: **A01C 5/06**

(30) Priorität: **08.06.89 DE 3918750**

(43) Veröffentlichungstag der Anmeldung:
**12.12.90 Patentblatt 90/50**

(84) Benannte Vertragsstaaten:
**AT DE FR**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Steenken, Bernd**
**Waldhöfe 17**
**D-4475 Sögel(DE)**

(54) **Scharkörper für eine lösbare und abnehmbare Anordnung an einem Normalsäschar.**

(57) Scharkörper für die lösbare und abnehmbare Anordnung an einem Normalsäschar, wobei der Scharkörper an dem Normalsäschar mittels eines an dem Normalsäschar leicht lösbaren Verbindungselementes anzuordnen ist, so daß das Normalsäschar leicht in einen anderen Schartyp umwandelbar ist. Um diese Umwandlung eines Normalsäschares in einen anderen Schartyp weiterzubilden, ist vorgesehen, daß an dem Normalsäschar (1) ein als Einscheibensäschar (7) ausgebildeter Schartyp anzuordnen ist, wobei die Scharscheibe (8) des Einscheibensäschares (7) drehbar an dem an dem Normalsäschar (1) anzuordnenden Verbindungselement (11) befestigt ist, und daß das Saatgut (22) in die von dem Einscheibenschar (7) gezogene Saatfurche (20) durch das Normalsäschar (1) ablegbar ist

FIG. 3

## Scharkörper für die lösbare und abnehmbare Anordnung an einem Normalsäschar

Die Erfindung betrifft einen Scharkörper für die lösbare und abnehmbare Anordnung an einem Normalsäschar gemäß des Oberbegriffes des Patentanspruches 1.

Durch die deutsche Patentschrift 32 17 350 ist ein derartiger Scharkörper bekannt. Eine derartige abnehmbare Anordnung eines Scharkörpers an einem Normalsäschar, um das Normalsäschar in einen anderen Schartyp umzuwandeln hat sich in der Praxis erwährt.

Der Erfindung liegt die Aufgabe zugrunde, diese Umwandlung eines Normalsäschares in einen anderen Schartyp weiterzubilden.

Diese Aufgabe wird erfindungsgemäß durch die Maßnahme gemäß des Kennzeichen des Anspruches 1 gelöst. Infolge dieser Maßnahme läßt sich in einfachster Weise das Normalsäschar in ein Einscheibensäschar umwandeln. Somit kann der Landwirt seine Drillmaschine für normale Einsatzfälle auf einfachste Weise in eine Einscheibensäschardrillmaschine umwandeln, um dann auch auf unsaüberen Bodenoberflächen das Saatgut in den Boden mit ein und derselben Maschine einbringen zu können.

Der erfindungsgemäße Scharkörper, der als Einscheibensä schar ausgebildet ist, ist wesentlich kostengünstiger als der in der europäischen Patentanmeldung 02 86 730 vorgeschlagene Bausatz für Sämaschinen mit austauschbaren Säscharkörpern. Bei dem in diesem europäischen Patentschrift vorgeschlagenem Bausatz wird der Normalsäscharkörper komplett gegen einen Einscheibensäscharkörper ausgetauscht. Hierzu sind die einzelnen Scharkörpertypen lösbar am Haltearm der Drillmaschine befestigt.

Der erfindungsgemäße Vorschlag geht hier einen ganz anderen Weg, in dem das Normalsäschar als komplette Einheit beibehalten wird und in erfindungsgemäßer Weise als Leitelement zur Führung des Saatgutes in Richtung der von dem Säschar gezogenen Säfurche bei einen Einscheibensäschar verwendet wird. Somit bildet das Normalsäschar das Leitelement zur Führung des Saatgutes in die Säfurche bei einem Einscheibensäschar. Eine äußerst elegante Anordnung des Einscheibensäscharkörpers an dem Normalsäschar ergibt sich dadurch, daß das Einscheibensäschar an der Scharhalterung gegenüber der Vertikalen um einen Winkel geneigt und in Fahrtrichtung ebenfalls um einen Winkel schräg gestellt ist. Hierdurch schmiegt sich die Scheibe des Einscheibensäschares an das Normalsäschar an und das Normalsäschar ist sehr dicht an der Scharscheibe angeordnet, so daß sicher gewährleistet ist, daß das Saatgut von dem Normalsäschar sicher in die Säfurche geleitet wird.

Eine Verfestigung der Säfurche sowie das Verhindern des Zurückfallens der aus der Säfurche ausgehobenen Erde wird dadurch ereicht, daß die Scharkufe des Normalsäschares zumindest annähernd bis in den unteren Bereich der Umfangsgrenze des Einscheibensäschares reicht. Eine einfache und kostengünstige Befestigung des Tiefenbegrenzers sowie eine gute Tiefenführung des Einscheibensäschares wird dadurch erreicht, daß an dem Verbindungselement, mit dem das Einscheibensäschar auf dem Normalsäschar befestigt ist, eine Tiefenführungskufe angeordnet ist, und daß die Tiefenführungskufe sich neben der von dem Einscheibensäschar gezogenen Saatfurche und auf der dem Einscheibensäschar abgewandten Seite des Normalsäschares befindet.

Eine äußerst einfache und kostenfünstige Ausbildung des Einscheibensäschares wird dadurch erreicht, daß die Scheibe des Einscheibensäschares als Kuststoffteil ausgebildet ist.

Weitere Einzelheiten der Erfindung sind den übrigen Unteransprüchen, der Beispielsbeschreibung und den Zeichnungen zu entnehmen. Hierbei zeigen:

Fig. 1 ein bekanntes Normalsäschar in der Seitenansicht,

Fig. 2 das erfindungsgemäße Einscheibensäschar mit Halterung und Tiefenführungskufe in der Seitenansicht,

Fig. 3 die Anordnung des Einscheibensäschares gemäß Fig. 2 an dem Normalsäschar gemäß Fig. 1 in der Seitenansicht,

Fig. 4 das an dem Normalsäschar angeordnete Einscheibensäschar in der Ansicht von vorne.

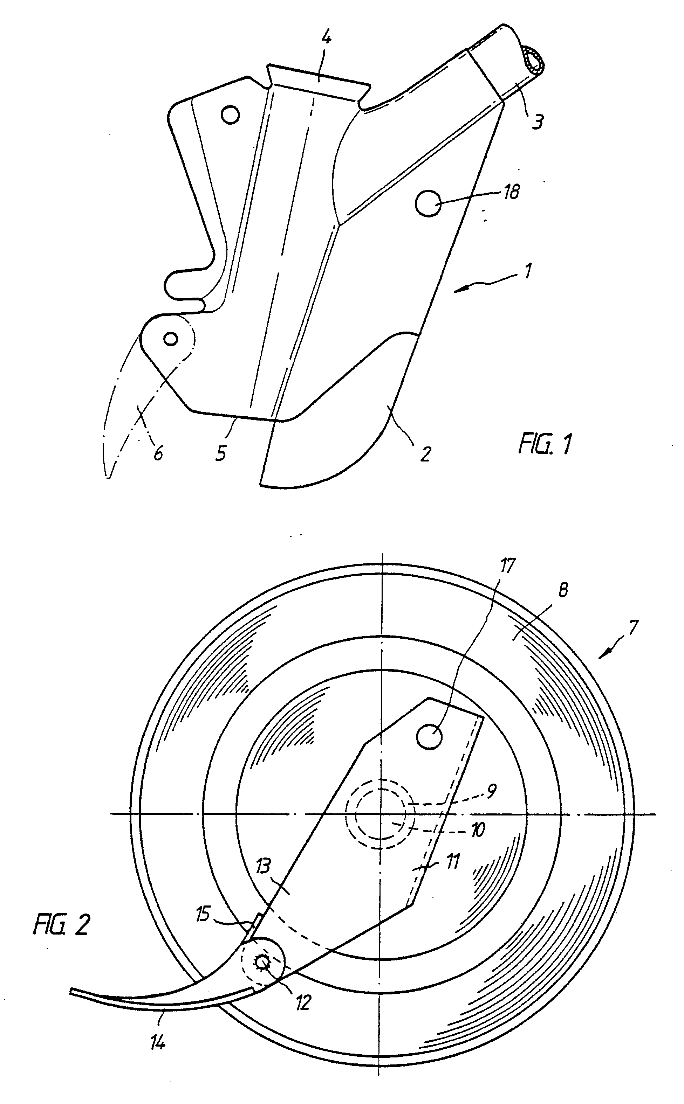

Die Figur 1 zeigt das Normalsäschar 1 mit der Scharkufe 2, der Scharhalterung 3, dem Saatguteinlauf 4, dem Saatgutauslauf 5 und der mit strichpunktierten Linien angedeuteten Scharstütze 6.

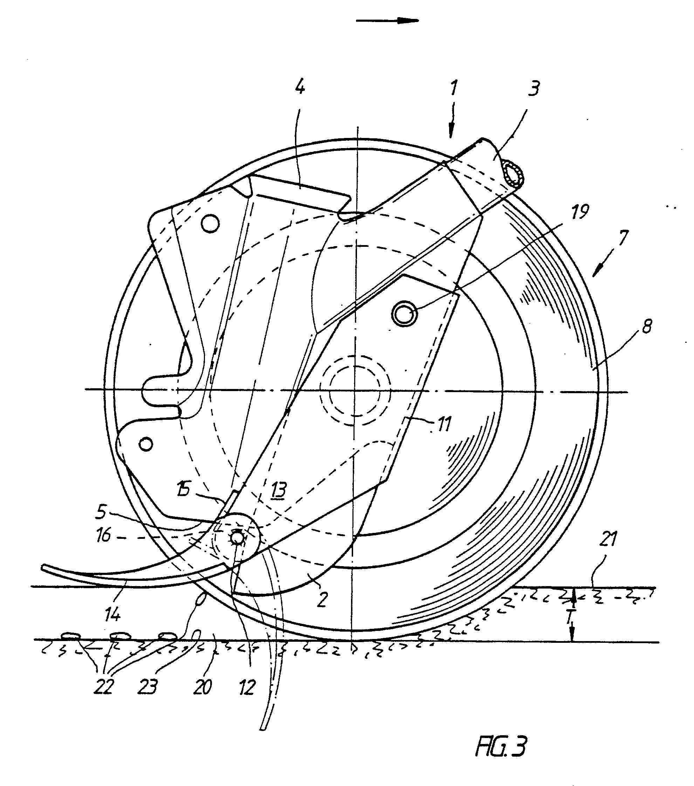

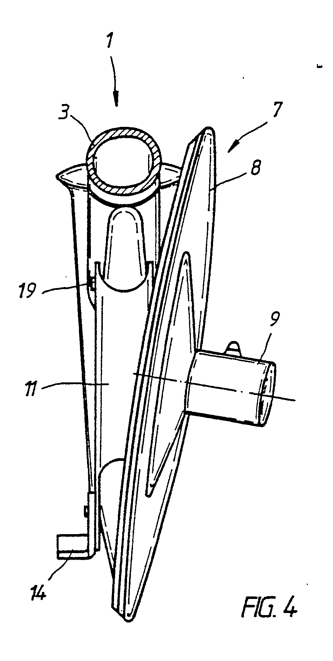

Die Figur 2 zeigt das Einscheibensäschar 7 mit der Scharscheibe 8, welche über ihre Nabe 9 auf der Welle 10 der als U-förmige Tasche 11 ausgebildeten Verbindungselement drehbar gelagert ist. Am unterem Ende der Tasche 11 befindet sich der Querbolzen 12, welcher die beiden Schenkel 13 der U-förmigen Tasche 11 miteinander verbindet. Gleichzeitig ist an diesem Bolzen 12 die Tiefenführungskufe 14 schwenkbar gelagert. Während des Einsatzes legt sich der Anschlag 15 der Tiefenführungskufe 14 an den Schenkeln 13 der U-förmigen Tasche 11 an. Das Einscheibensäschar läßt sich mit der U-förmigen Tasche 11 auf dem Normalsäschar 1 leicht lösbar.und abnehmbar befestigen, um das Normalsäschar 1 in ein Einscheibensäschar umzuwandeln, wie dieses Fig. 3 zeigt. Hierzu wird die Halterung 11 von unten her auf das Normalsäschar 1 aufgesteckt. Hierbei faßt die hintere Kante 16 der Scharkufe 2 des Normalsäschares 1 hinter den Bolzen 12 der Tasche 11, so daß ein sicherer Sitz der Tasche 11 auf dem Normalsäschar 1 gewährleistet ist. In ihrem oberen Bereich weist die Tasche 11 die Bohrung 17 auf. Diese Bohrung 17 deckt sich mit der in dem Normalsäschar 1 sich befindlichen Bohrung 18. Durch die beiden Bohrungen wird der Bolzen 19 gesteckt und mittels eines Sicherungselementes gesichert, so daß die Tasche 11 sicher auf dem Normalsäschar angeordnet ist. Die Tasche 11 ist also als Verbindungselement zwischen dem Normalsäschar 1 und dem Einscheibensäschar aufgebildet. Wie insbesondere Fig. 4 zeigt, ist die Scharscheibe 8 des Einscheibensäschares 7 an der als U-förmigen Tasche 11 ausgebildeten Halterung und somit gegenüber dem Normalsäschar 1 in der Vertikalen um einen Winkel geneigt und ebenfalls um einen weiteren Winkel in Fahrtrichtung schräg angestellt.

Die Tiefenführungskufe 14 ist an der U-förmigen Tasche 11 neben der von dem Einscheibensäschar 7 gezogenen Saatfurche 20 und auf der dem Einscheibensäschar 7 abwandten Seite des Normalsäschares 1 angeordnet. Die Scheibe 8 des Einscheibensäschares ist als Kunststoffteil ausgebildet. Hierbei ist die Scheibe 8 als Kunststoffspritzgußteil ausgebildet, wobei die Nabe 9 für das Drehlager an der Scheibe 8 angespritzt ist.

Wenn die Scharscheibe 8 des Einscheibensäschares 7 über die U-förmige Tasche 11 an dem Normalsäschar 1 befestigt ist, wird von der Scharscheibe 8 die Saatfurche 20 in den Boden 21 gezogen. Die Eindringtiefe T der Scharscheibe 8 in den Boden 21 wird durch die Scharkufe 14 bestimmt, welche mit ihrer unteren Fläche neben der Säfurche 20 auf dem Boden 21 aufliegt. Hierbei kann um unterschiedliche Eindringtiefen T in den Boden einstellen zu können, der Anschlag 15 einstellbar ausgebildet sein.

Durch den Saatguteinlauf 4 werden die von einem Dosiermechanismus und einer Zuführleitung dem Normalsäschar 1 zudosierten Saatgutkörner 22 bis zur Auslauföffnung 5 geleitet, wo dann die Saatgutkörner 22 auf dem Grund 23 der Säfurche 20 abgelegt werden. Die Saatgutkörner 22 werden also von dem Normalsäschar 1 in die Säfurche 20 geleitet. Die Scharkufe 2 des Normalsäschares 1 ist fluchtend zu der Säfurche 20 angeordnet.

**Ansprüche**

1. Scharkörper für die lösbare und abnehmbare Anordnung an einem Normalsäschar, wobei der Scharkörper an dem Normalsäschar mittels eines an dem Normalsäschar leicht lösbaren Verbindungselementes anzuordnen ist, so daß das Normalsäschar leicht in einen anderen Schartyp umwandelbar ist, dadurch gekennzeichnet, daß an dem Normalsäschar (1) ein als Einscheibensäschar (7) ausgebildeter Schartyp anzuordnen ist, wobei die Scharscheibe (8) des Einscheibensäschares (7) drehbar an dem an dem Normalsäschar (1) anzuordnenden Verbindungselement (11) befestigt ist, und daß das Saatgut (22) in die von dem Einscheibenschar (7) gezogene Saatfurche (20) durch das Normalsäschar (1) ablegbar ist.

2. Scharkörper nach Anspruch 1, dadurch gekennzeichnet, daß der Scharkörper mit einem Leitelement zur Führung des Saatgutes in Richtung der von dem Säschar (7) gezogenen Säfurche (20) ausgestattet ist, und daß das Leitelement von dem Normalsäschar (1) gebildet wird.

3. Säschar nach Anspruch 1, dadurch gekennzeichnet, daß das Einscheibensäschar (7) an der Scharhalterung (11) gegenüber der Vertikalen um einen Winkel geneigt und in Fahrtrichtung um einen Winkel schräggestellt ist.

4. Säschar nach Anspruch 1, dadurch gekennzeichnet, daß die Scharkufe (2) des Normalsäschares (1) zumindest annähernd bis in den unteren Bereich der Umfangskante der Scheibe (8) des Einscheibensäschares (7) reicht.

5. Säschar nach einem oder mehreren der vorstehenden Ansprüche, dadurch gekennzeichnet, daß an dem Verbindungselement (11), mit dem das Einscheibensäschar (7) auf den Normalsäschar (1) befestigt ist, eine Tiefenführungskufe (14) angeordnet ist, daß die Tiefenführungskufe (14) sich neben der von dem Einscheibensäschar (7) gezogenen Saatfurche (20) und auf der dem Einscheibensäschar (7) abgewandten Seite des Normalsäschares (1) befindet.

6. Säschar nach einem oder mehreren der vorstehenden Ansprüche, dadurch gekennzeichnet, daß die Scheibe (8) des Einscheibensäschares (7) als Kunststoffteil ausgebildet ist.

7. Säschar nach einem oder mehreren der vorstehenden Ansprüche, dadurch gekennzeichnet, daß die Scheibe (8) des Einscheibensäschares (7) als Kunststoffspritzgußteil ausgebildet ist, daß die Nabenteile (9) für das Drehlager an der Scheibe (8) angespritzt sind.

8. Säschar nach einem oder mehreren der vorstehenden Ansprüche, dadurch gekennzeichnet, daß sowohl die Scheibe (8) des Einscheibensäschares (7) mit ihrem Nabenteil (9), als auch das Verbindungsteil (11), mit dem die Scheibe (8) des Einscheibensäschares (7) auf dem Normalsäschar (1) befestigt ist, aus Kunststoff hergestellt sind.

FIG. 1

FIG. 2

EP 0 401 593 A1

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3808916 (ACCORD-LANDMASCHINEN) <br> * Spalte 3, Zeile 40 – Spalte 4, Zeile 32; Figuren 1, 2 * <br> --- | 1-4 | A01C5/06 |
| A | US-A-3213812 (FORSYTH) <br> * das ganze Dokument * <br> --- | 1, 2, 4 | |
| A | DE-C-3336147 (AMAZONEN-WERKE) <br> * Spalte 4, Zeile 50 – Spalte 7, Zeile 9; Figuren 1-8 * <br> ----- | 1-5 | |
| | | | **RECHERCHIERTE SACHGEBIETE (Int. Cl.5)** <br><br> A01C |

Der vorliegende Recherchenbericht wurde für alle Patentansprüche erstellt

| Recherchenort | Abschlußdatum der Recherche | Prüfer |
|---|---|---|
| DEN HAAG | 07 SEPTEMBER 1990 | HERYGERS J.J. |